# EUROPEAN PATENT SPECIFICATION

(11) **EP 2 747 395 B1**
(45) Date of publication and mention of the grant of the patent: **06.06.2018**
(21) Application number: 12785381.0
(22) Date of filing: 20.04.2012
(51) Int. Cl.: H04M 1/73, H04W 52/02

(54) **MOBILE TERMINAL AND POWER SAVING METHOD THEREOF**
MOBILES ENDGERÄT UND ENERGIESPARVERFAHREN DAFÜR
TERMINAL MOBILE ET PROCÉDÉ D'ÉCONOMIE D'ÉNERGIE ASSOCIÉ

(30) Priority: 31.10.2011 CN 201110337454
(43) Date of publication of application: 25.06.2014
(73) Proprietor: ZTE Corporation, Shenzhen, Guangdong 518057 (CN)
(72) Inventor: ZHANG, Yiming, Shenzhen, Guangdong 518057 (CN); ZHAN, Ming, Shenzhen, Guangdong 518057 (CN); DONG, Jinguang, Shenzhen, Guangdong 518057 (CN)
(74) Representative: Petraz, Gilberto Luigi
(86) International application number: PCT/CN2012/074446
(87) International publication number: WO 2012/155760

(56) References cited:
- CN-A- 101 938 816
- CN-A- 102 014 471
- JP-A- 2004 312 540
- US-A1- 2003 022 704
- US-A1- 2007 254 657

## Description

### Technical Field

The present document relates to the field of communication technologies, and in particular, to a mobile terminal and a method for power saving thereof.

### Background of the Related Art

The Bluetooth technology is used as a kind of open standard for wireless data and voice communication, it is based on a close range wireless connection with a low cost, which enables the terminal apparatus with a Bluetooth function to realize the seamless sharing of resources in a short range, and therefore, the Bluetooth technology is widely applied in products such as embedded, portable terminals. Such products generally have characteristics such as portability, a small volume etc., has a higher demand on the battery life, and therefore, under the condition of the limited battery capacity, a higher requirement is made on the power consumption of a peripheral module on the product, especially for the Bluetooth module, after the application thereof is started, the Bluetooth chip is always being in an operating mode, including the mobile phone entering into a standby mode, to ensure that the Bluetooth device of the mobile terminal makes a normal response when an external Bluetooth device makes a request with the Bluetooth device of the mobile terminal. This increases additional power consumption of the mobile terminal with no doubt. For the characteristics of the Bluetooth, the present document provides a method for controlling a Bluetooth module of a mobile terminal to enter into a power saving mode, which can ensure that the Bluetooth chip is enabled to enter into the state of power saving mode immediately when there is no data service.

A mobile terminal and a method for power saving thereof is also known from US 2007/0254657 A1 (SATOH KAZUTAKA [JP] ET AL) 1 November 2007 (2007-11-01).

### Summary of the Invention

The purpose of the present document is to provide a method for controlling a Bluetooth module of a mobile terminal to enter into a power saving mode, which ensures that the Bluetooth module of the mobile terminal is enabled to enter into the state of power saving mode immediately when there is no data interaction, and ensures that the Bluetooth is enabled to enter into a power saving mode immediately when there is no service, and the Bluetooth module can recover to a state of normal operating mode when an external Bluetooth device makes a request.

In order to implement the above purpose, the technical scheme of the present document is implemented as follows.

A method for power saving of a mobile terminal, comprising: the mobile terminal monitoring changes of data on a Universal Asynchronous Receiver/Transmitter (UART) bus, acquiring current operating states of a Bluetooth chip and a main control chip on the mobile terminal; and when detecting that there is no data on the UART bus, the main control chip controlling a Bluetooth module to enter into a power saving mode.

Wherein, when there is a Bluetooth event outside, the mobile terminal is awoken, while monitoring a state of the data activities on the UART bus.

Wherein, a corresponding interruption will be generated after the data activity, transmission or reception of the data, on the UART bus is completed, to enter into an interruption process of the UART transmission and reception; and a timer is activated in the interruption process, and thereby the Bluetooth module is controlled to enter into the power saving mode.

Wherein, if the timer expires, whether an ID of the timer is valid and a variable uart_last_acess for identifying whether there are data activities on the UART bus is 1 are determined; if the ID of the timer is invalid and the uart_last_acess is not 1, the Bluetooth module is controlled to enter into the power saving mode.

Wherein, after the Bluetooth module of the mobile terminal enters into the power saving mode, whether the mobile terminal enters into the standby state is detected, if the mobile terminal enters into the standby state, it is determined that the data activities on the UART bus will no longer be monitored.

A mobile terminal, comprising a Bluetooth module, a monitor module and a main control module; wherein,
the Bluetooth module is used to communicate with an external Bluetooth device;
the monitor module is used to monitor a data state on the UART bus and feed the data state to the main control module; and
the main control module is used to communicate with and control the Bluetooth module; and when the monitor module detects that there is no data on the UART bus, control the Bluetooth module to enter into the power saving mode.

Wherein, when there is a Bluetooth event outside, the mobile terminal is awoken to monitor the state of the data activities on the UART bus.

Wherein, a corresponding interruption will be generated after the data activity, transmission or reception of the data, on the UART bus is completed, to enter into an interruption process of the UART transmission and reception; and a timer is activated in the interruption process, and thereby the Bluetooth module is controlled by the main control module to enter into the power saving mode.

Wherein, if the timer expires, it is to enter into an interruption process function of expiration of the timer of the monitor module, to determine whether an ID of the timer is valid and a variable uart_last_acess for identifying whether there are data activities on the UART bus is 1; and if the ID of the timer is invalid and the uart_last_acess is not 1, the Bluetooth module is set to enter into the power saving mode.

Wherein, after the Bluetooth module of the mobile terminal enters into the power saving mode, the monitor module is used to detect whether the mobile terminal enters the standby state; and if the mobile terminal enters into the standby state, determine that the data activities on the UART bus will no longer be monitored.

In conclusion, with the present document, there will be following benefit effects.

A method for controlling a Bluetooth module of a mobile terminal to enter into a power saving mode is provided, and with this method, the data on the bus can be monitored in real time and a corresponding operating mode thereof can be set. By adopting this method, once it is detected that there is no data on the bus, the Bluetooth module will be enabled to enter into a state of power saving immediately, which ensures that the Bluetooth module is always in the state of power saving mode when there is no service ongoing, thereby increasing the standby time of the mobile terminal to the maximum extent, and improving the level of the user experience.

### Brief Description of Drawings

Fig. 1 is a diagram of a constitution of a mobile terminal according to an embodiment of the present document;
Fig. 2 is a specific procedure of controlling a power saving mode of a Bluetooth module by a main control module according to an embodiment of the present document; and
Fig. 3 is a specific implementation procedure of a monitor module in an embodiment of the present document.

### Preferred Embodiments of the Invention

The present document provides a method for controlling a mobile terminal and power saving thereof, specifically a method for controlling a Bluetooth module of a mobile terminal to enter into a power saving mode, which ensures that the Bluetooth module of the mobile terminal is enabled to enter into the state of power saving mode immediately when there is no data interaction, and ensures that the Bluetooth is enabled to enter into a power saving mode immediately when there is no service, and the Bluetooth module can recover to a state of normal operating mode when an external Bluetooth device makes a request. By this method, the cruising ability of the battery of the mobile terminal can be enhanced and the standby time of the terminal can be increased.

At present, the mode of the communication between the main control chip and the Bluetooth chip is generally performed over a Universal Asynchronous Receiver/Transmitter (UART) bus, and as long as a Bluetooth functional service is in progress, there will be active data on the UART bus, and therefore, the current operating states of the Bluetooth chip and the main control chip can be indirectly acquired by monitoring the change of the data on the UART bus, thus setting the operating mode of the Bluetooth chip. This ensures that the Bluetooth module is enabled to enter into the power saving mode when there is no service ongoing, which avoids unnecessary power consumption by the Bluetooth module.

The technical scheme of the present document includes the following steps.

In step one, the change of the data on the UART bus is monitored in real time by using a monitor module;

In step two, according to the change of the data on the UART bus, the Bluetooth module is controlled to be in a corresponding state of operating mode.

The specific implementation scheme of the monitor module in the above step one is as follows.

When the UART performs data transmission, the processor chip will be notified, by means of interruption, that the transmission or reception of the data is completed, and with this characteristics of the UART, in the interruption process function of the UART transmission and reception, one monitor module is added to control the start of the timer, manage a current state of the timer, to decide whether the timer needs to be started, and whether a corresponding flag needs to be set, after the timer is started, once there is no data on the UART bus and the timer expires, it is to enter into an interruption process function of the expiration, and the main control module is notified that the Bluetooth module can enter into the state of power saving mode.

The specific implementation scheme of the above step two is as follows.
after the Bluetooth function starts, the monitor module is opened and enabled to monitor the state of the UART bus in real time, if there is a Bluetooth service ongoing, data or commands will be transmitted on the UART bus, and the monitor module will detect the change of data on the UART bus, once the data on the UART bus disappears, the monitor module will feeds it back to the main control module immediately, to notify the main control module that the Bluetooth module can enter into the state of power saving mode, the main control module issues a command to the Bluetooth module, the Bluetooth module enters into the power saving state, and when the mobile terminal enters into the standby phase, the monitor module is closed. When an external Bluetooth device makes a request, the main control mode is awoken by the Bluetooth module, and meanwhile, the monitor module is started, to monitor the data on the UART bus.

The technical scheme of the present document will be further described in detail in conjunction with accompanying drawing and specific embodiments hereinafter.

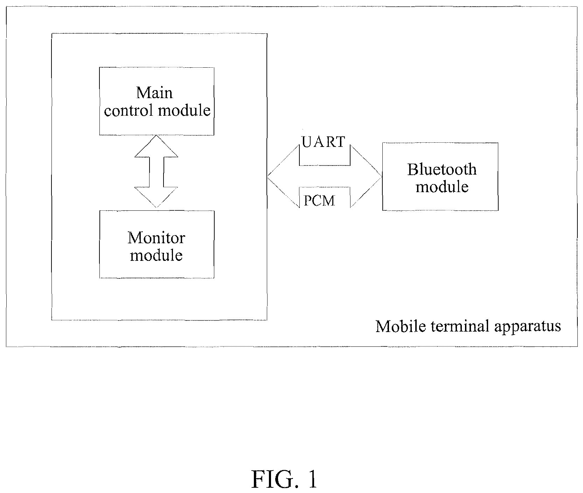

With respect to Fig. 1, a schematic block diagram of a constitution of a mobile terminal according to the present document is illustrated, and as shown in Fig. 1, the mobile terminal according to the present document includes a main control module, a monitor module and a Bluetooth module. Wherein, the main control module is used to communicate with and control the Bluetooth module, the monitor module is used to monitor the state of the data on the UART bus in real time and feed it back to the main control module, and the Bluetooth module is mainly responsible for the communication with an external Bluetooth device, implementing the control on interaction with a baseband chip and voice data transmission through the UART and a PCM interface etc.

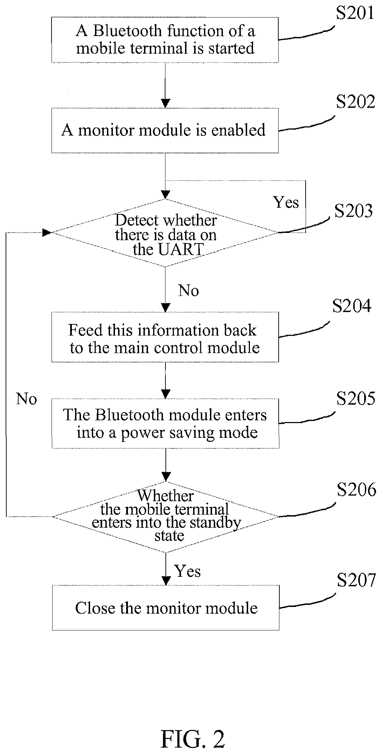

The monitor module is a core part for controlling the Bluetooth module to enter into the power saving mode, and is responsible for monitoring the state of the UART bus, and feeding the state back to the main control module in time, the power saving mode of the Bluetooth module is controlled by the main control module, and the specific control procedure is shown in Fig. 2, which comprises the following steps.

In step S201, a Bluetooth function of the mobile terminal is started;
in step S202, the monitor module is enabled;
in step S203, the monitor module monitors the data activities on the UART bus in real time, and if it is detected that there is no data on the UART bus, it is to turn to step S204, and if it is detected that there is data, the monitoring continues;
in step S204, once it is detected that there is no data on the UART bus, the information is fed back to the main control module immediately;
in step S205, the Bluetooth module enters into the power saving mode;
the main control module transmits a command to the Bluetooth module, to set the Bluetooth module to enter into the state of power saving mode.

In step S206, whether the mobile terminal enters into the standby state is monitored, if so, it is to turn to step S207, and if not, it is to turn to step S203;

In step S207, once the mobile terminal enters into the standby mode, the monitor module is closed.

When there is a Bluetooth event outside, the mobile terminal is awoken, and meanwhile, the monitor module is enabled, to monitor the state of the data activities on the UART bus.

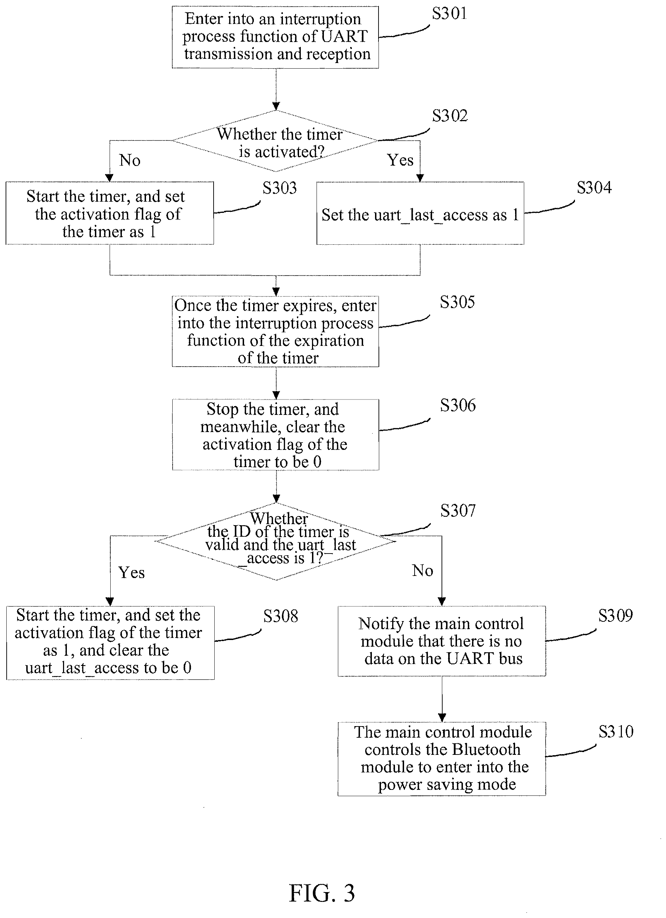

Wherein, the specific implementation procedure of the monitor module in the above steps is as shown in Fig. 3, which comprises the following steps.

In step S301, after there is a data activity on the UART bus and the transmission or reception of the data is completed, a corresponding interruption will be generated to enter into an interruption process function of the UART transmission and reception;
in step S302, it is to enter into the interruption process function, to determine whether the state of the timer is in an activation state;
in step S303, if the timer is not activated, it needs to start the timer and set the activation flag of the timer as 1;
in step S304, if the timer is in an activation state at this time, a variable uart_last_acess is set as 1, to identify that there is a data activity on the UART bus;
in step S305, after the timer is started, once the timer expires, it is to enter into an interruption process function of the expiration of the timer;
in step S306, the timer is stopped, and meanwhile, the activation flag of the timer is cleared to be 0;
in step S307, whether the ID of the timer is valid and the uart_last_acess is 1 are determined;
in step S308, if the ID of the timer is valid and the uart_last_acess is 1, the timer is started and the activation flag of the timer is set as 1, and the uart_last_acess is cleared to be 0;
in step S309, if the above conditions are not satisfied, it can be determined that there is no active data on the UART bus, and the main control module is notified that there is no data on the UART bus, and the Bluetooth module can enter into the power saving mode;
in step S310, the main control module controls the Bluetooth module to enter into the power saving mode.

The technical scheme of the present document can make the Bluetooth module of the mobile terminal enter into the Bluetooth power saving mode rapidly in the case that the basic function is normal when there is no service, thus being able to enhance the standby time of the mobile terminal.

The above description is only preferred embodiments of the present document, and is not used to limit the protection scope of the present document.

## Claims

1. A method for power saving of a mobile terminal, comprising: the mobile terminal monitoring changes of data on a Universal Asynchronous Receiver/Transmitter (UART) bus, acquiring current operating states of a Bluetooth chip and a main control chip on the mobile terminal; and when detecting that there is no data on the UART bus, the main control chip controlling a Bluetooth module to enter into a power saving mode.

2. The method according to claim 1, wherein, when there is a Bluetooth event outside, the mobile terminal is awoken, while monitoring a state of the data activities on the UART bus.

3. The method according to claim 1 or 2, wherein, a corresponding interruption will be generated after the data activity, transmission or reception of the data, on the UART bus is completed, to enter into an interruption process of the UART transmission and reception; and a timer is activated in the interruption process, and thereby the Bluetooth module is controlled to enter into the power saving mode.

4. The method according to claim 3, wherein, if the timer expires, whether an ID of the timer is valid and a variable uart_last_acess for identifying whether there are data activities on the UART bus is 1 are determined; if the ID of the timer is invalid and the uart_last_acess is not 1, the Bluetooth module is controlled to enter into the power saving mode.

5. The method according to claim 1, wherein, after the Bluetooth module of the mobile terminal enters into the power saving mode, whether the mobile terminal enters into the standby state is detected, if the mobile terminal enters into the standby state, it is determined that the data activities on the UART bus will no longer be monitored.

6. A mobile terminal, comprising a Bluetooth module, a monitor module and a main control module; wherein,
the Bluetooth module is used to communicate with an external Bluetooth device, and the main control module is used to communicate with and control the Bluetooth module;
**characterized in that**: the monitor module is used to monitor a data state on the UART bus and feed the data state to the main control module; and the main control module is used to when the monitor module detects that there is no data on the UART bus, control the Bluetooth module to enter into the power saving mode.

7. The mobile terminal according to claim 6, wherein, when there is a Bluetooth event outside, the mobile terminal is awoken to monitor the state of the data activities on the UART bus.

8. The mobile terminal according to claim 6 or 7, wherein, a corresponding interruption will be generated after the data activity, transmission or reception of the data, on the UART bus is completed, to enter into an interruption process of the UART transmission and reception; and a timer is activated in the interruption process, and thereby the Bluetooth module is controlled by the main control module to enter into the power saving mode.

9. The mobile terminal according to claim 8, wherein, if the timer expires, it is to enter into an interruption process function of expiration of the timer of the monitor module, to determine whether an ID of the timer is valid and a variable uart_last_acess for identifying whether there are data activities on the UART bus is 1; and if the ID of the timer is invalid and the uart_last_acess is not 1, the Bluetooth module is set to enter into the power saving mode.

10. The mobile terminal according to claim 6, wherein, after the Bluetooth module of the mobile terminal enters into the power saving mode, the monitor module is used to detect whether the mobile terminal enters into the standby state; and if the mobile terminal enters into the standby state, determine that the data activities on the UART bus will no longer be monitored.

## Patentansprüche

1. Energiesparverfahren für ein mobiles Endgerät, umfassend: Überwachen von Datenänderungen auf einem UART (Universal Asynchronous Receiver/Transmitter)-Bus durch das mobile Endgerät, Erfassen der aktuellen Betriebszustände eines Bluetooth-Chips und eines Hauptsteuerchips auf dem mobilen Endgerät; und Steuern eines Bluetooth-Moduls durch den Hauptsteuerchip zum Übergang in einen Energiesparmodus, wenn keine Daten auf dem UART-Bus festgestellt werden.

2. Verfahren nach Anspruch 1, wobei das mobile Endgerät beim Überwachen eines Zustands der Datenaktivitäten auf dem UART-Bus aktiviert wird, wenn extern ein Bluetooth-Ereignis stattfindet.

3. Verfahren nach Anspruch 1 oder 2, wobei eine entsprechende Unterbrechung nach Abschluss der Datenaktivität, der Übertragung oder des Empfangs der Daten auf dem UART-Bus erzeugt wird, um einen Unterbrechungsprozess der UART-Übertragung und des Empfangs einzuleiten; und wobei während des Unterbrechungsprozesses ein Timer aktiviert wird, wodurch das Bluetooth-Modul zum Übergang in den Energiesparmodus gesteuert wird.

4. Verfahren nach Anspruch 3, wobei nach Ablauf des Timers bestimmt wird, ob eine ID des Timers gültig ist und ein variabler uart_last_acess zum Feststellen, ob Datenaktivitäten auf dem UART-Bus stattfinden, auf 1 gesetzt ist; falls die ID des Timers ungültig ist und uart_last_acess nicht 1 ist, wird das Bluetooth-Modul zum Übergang in den Energiesparmodus gesteuert.

5. Verfahren nach Anspruch 1, wobei nach dem Übergang des Bluetooth-Moduls des mobilen Endgeräts in den Energiesparmodus festgestellt wird, ob das mobile Endgerät in den Stand-by-Zustand übergegangen ist; wenn das mobile Endgerät in den Stand-by-Zustand übergegangen ist, bestimmt wird, dass die Datenaktivitäten auf dem UART-Bus nicht länger überwacht werden.

6. Mobiles Endgerät, umfassend ein Bluetooth-Modul, ein Überwachungsmodul und ein Hauptsteuermodul; wobei
das Bluetooth-Modul zum Kommunizieren mit einem externen Bluetooth-Gerät verwendet wird und das Hauptsteuermodul zum Kommunizieren mit dem Bluetooth-Modul und zum Steuern des Bluetooth-Moduls verwendet wird;
**dadurch gekennzeichnet, dass**: das Überwachungsmodul zum Überwachen eines Datenzustands auf dem UART-Bus und zum Einspeisen des Datenzustands in das Hauptsteuermodul verwendet wird; und dass das Hauptsteuermodul zum Steuern des Bluetooth-Moduls zum Übergang in den Energiesparmodus verwendet wird, wenn das Überwachungsmodul feststellt, dass sich keine Daten auf dem UART-Bus befinden.

7. Mobiles Endgerät nach Anspruch 6, wobei das mobile Endgerät beim Überwachen des Zustands der Datenaktivitäten auf dem UART-Bus aktiviert ist, wenn extern ein Bluetooth-Ereignis stattfindet.

8. Mobiles Endgerät nach Anspruch 6 oder 7, wobei eine entsprechende Unterbrechung nach Abschluss der Datenaktivität, der Übertragung oder des Empfangs der Daten auf dem UART-Bus erzeugt ist, um einen Unterbrechungsprozess der UART-Übertragung und des Empfangs einzuleiten; und wobei während des Unterbrechungsprozesses ein Timer aktiviert ist, wodurch das Bluetooth-Modul vom Hauptsteuermodul zum Übergang in den Energiesparmodus gesteuert wird.

9. Mobiles Endgerät nach Anspruch 8, wobei der Timer nach seinem Ablauf eine Unterbrechungsprozessfunktion für den Ablauf des Timers des Überwachungsmoduls aufruft, um zu bestimmen, ob eine ID des Timers gültig ist und ein variabler uart_last_acess zum Feststellen, ob Datenaktivitäten auf dem UART-Bus stattfinden, auf 1 gesetzt ist; und falls die ID des Timers ungültig ist und uart_last_acess nicht 1 ist, wird das Bluetooth-Modul zum Übergang in den Energiesparmodus gesteuert.

10. Mobiles Endgerät nach Anspruch 6, wobei das Überwachungsmodul nach dem Übergang des Bluetooth-Moduls des mobilen Endgeräts in den Energiesparmodus zum Feststellen verwendet wird, ob das mobile Endgerät in den Stand-by-Zustand übergegangen ist; und wenn das mobile Endgerät in den Stand-by-Zustand übergegangen ist, bestimmt, dass die Datenaktivitäten auf dem UART-Bus nicht länger überwacht werden.

## Revendications

1. Procédé d'économie d'énergie pour un terminal mobile, comprenant les étapes suivantes : le terminal mobile surveille des changements de données sur un bus d'émetteur-récepteur universel asynchrone (UART pour Universal Asynchronous Receiver Transmitter), les états de fonctionnement actuels d'une puce Bluetooth et d'une puce de commande principale sont acquis sur le terminal mobile ; et, lorsqu'il est détecté qu'aucune donnée n'existe sur le bus UART, la puce de commande principale donne comme instruction au module Bluetooth de passer en mode d'économie d'énergie.

2. Procédé selon la revendication 1 dans lequel, lorsqu'il y a un événement Bluetooth à l'extérieur, le terminal mobile est réveillé, pendant que l'état des activités des données sur le bus UART est surveillé.

3. Procédé selon la revendication 1 ou 2 dans lequel une interruption correspondante sera générée une fois que l'activité de données, une émission ou une réception de données su le bus UART sera complétée, pour passer à un procédé d'interruption de l'émission et de la réception UART ; et un temporisateur sera actionné dans le procédé d'interruption, par lequel le module Bluetooth reçoit l'instruction de passer en mode d'économie d'énergie.

4. Procédé selon la revendication 3 dans lequel il est déterminé si le temporisateur expire, si un ID du temporisateur est valide et si une variable uart_last_access d'identification de la présence d'activités de données sur le bus UART est 1 ; si le ID du temporisateur n'est pas valide et si le dernier accès UART n'est pas 1, le module Bluetooth reçoit l'instruction de passer en mode d'économie d'énergie.

5. Procédé selon la revendication 1 dans lequel, une fois que le module Bluetooth du terminal mobile est passé en mode d'économie d'énergie, il est déterminé si le terminal mobile passe en état d'alerte, et si le terminal mobile passe en état d'alerte, il est déterminé que les activités de données sur le bus UART ne seront plus surveillées.

6. Terminal mobile, comprenant un module Bluetooth, un module de surveillance et un module de commande principale ; dans lequel le module Bluetooth est utilisé pour communiquer avec un dispositif Bluetooth externe, et le module de commande principale est utilisé pour communiquer avec et instruire le module Bluetooth ;
**caractérisé en ce que** : le module de surveillance est utilisé pour surveiller un état de données sur le bus UART et pour fournir l'état de données au module de commande principale; et le module de commande principale est utilisé, lorsque le module de surveillance détecte qu'aucune donnée n'existe sur le bus, pour donner au module Bluetooth l'instruction de passer en mode d'économie d'énergie.

7. Terminal mobile selon la revendication 6 dans lequel, lorsqu'il y a un événement Bluetooth à l'extérieur, le terminal mobile est réveillé pour surveiller l'état des activités de données sur le bus UART.

8. Terminal mobile selon la revendication 6 ou 7, dans lequel une interruption correspondante sera générée une fois que l'activité de données, une émission ou une réception de données sur le bus UART sera complétée, pour passer à un procédé d'interruption de l'émission et de la réception UART ; et un temporisateur sera actionné dans le procédé d'interruption, par lequel le module Bluetooth reçoit du module de commande principale l'instruction de passer en mode d'économie d'énergie.

9. Terminal mobile selon la revendication 8, dans lequel, en cas d'expiration du temporisateur, il doit passer à un procédé d'interruption en fonction de l'expiration du temporisateur du module de surveillance, pour déterminer si un ID du temporisateur est valide et si une variable uart_last_access d'identification de la présence d'activités de données sur le bus UART est 1 ; si le ID du temporisateur n'est pas valide et si le dernier accès UART n'est pas 1, le module Bluetooth est réglé pour passer en mode d'économie d'énergie.

10. Terminal mobile selon la revendication 6 dans lequel, une fois que le module Bluetooth du terminal mobile est passé en mode d'économie d'énergie, le module de surveillance est utilisé pour détecter si le terminal mobile passe en état d'alerte ; et si le terminal mobile passe en état d'alerte, pour déterminer que les activités de données sur le bus UART ne seront plus surveillées.
